# EUROPEAN PATENT SPECIFICATION

(11) **EP 1 574 969 B1**
(45) Date of publication and mention of the grant of the patent: **16.05.2007**
(21) Application number: 04004801.9
(22) Date of filing: 02.03.2004
(51) Int. Cl.: G06F 17/30

(54) **Method for the automated annotation of multi-dimensional database reports with information objects of a data repository**
VERFAHREN ZUR AUTOMATISIERTEN ANMERKUNG VON BERICHTEN MEHRDIMENSIONALER DATENBANKEN MIT INFORMATIONSOBJEKTEN EINES DATENSPEICHERS
Méthode pour l'annotation automatisée de rapports de bases de données multidimensionnelles avec des objets d'information d'un dépôt de données

(43) Date of publication of application: 14.09.2005
(73) Proprietor: Fraunhofer-Gesellschaft zur Förderung der angewandten Forschung e.V., 80686 München (DE)
(72) Inventor: Becks, Andreas, 52072 Aachen (DE); Seeling, Christian, 52445 Titz (DE); Frese, Dino, 52062 Aachen (DE)
(74) Representative: Hilleringmann, Jochen

(56) References cited:
- THE INTEGRATION OF BUSINESS INTELLIGENCE AND KNOWLEDGE MANAGEMENT, [Online] 2002, pages 697-713, XP002300608 CODY ET AL Retrieved from the Internet: URL:http://www.research.ibm.com/journal/sj /414/cody.pdf> [retrieved on 2004-10-12]
- PRIEBE T ET AL: "Ontology-based integration of olap and information retrieval" PROCEEDINGS. 14TH INTERNATIONAL WORKSHOP ON DATABASE AND EXPERT SYSTEMS APPLICATIONS, 1 September 2003 (2003-09-01), pages 610-614, XP010658122
- SEWASIE - SPECIFICATION OF THE ARCHITECTURE OF THE MONITORING AGENT - VISUALIZATION COMPONENT, [Online] 22 November 2002 (2002-11-22), pages 1-41, XP002300606 Retrieved from the Internet: URL:http://www.sewasie.org/D4%5B1%5D.1_FIN AL.doc> [retrieved on 2004-09-28]
- SEWASIE - SPECIFICATION OF THE INTERFACE DESIGN, [Online] 29 October 2003 (2003-10-29), pages 1-25, XP002300607 Retrieved from the Internet: URL:http://www.sewasie.org/D4%5B1%5D.4_Fin al.doc> [retrieved on 2004-09-29]
- QUALITY-ORIENTED DESIGN OF DATA WAREHOUSES, [Online] 10 June 2002 (2002-06-10), XP002300609 Retrieved from the Internet: URL:http://forum.iwi.unisg.ch/downloads/fo rum/8/DWH8_Jarke.pdf> [retrieved on 2004-09-28]

## Description

### BACKGROUND OF THE INVENTION

### Field of the Invention

The present invention relates to a method for the automated annotation of multi-dimensional database reports with information objects of a data repository.

### Introduction

In financial planning and controlling, companies need to continuously monitor information about customers, competitors, products or market-relevant events in order to assess their situation in a global setting. These heterogeneous pieces of information are often found in information objects like unstructured documents (like news reports, press announcements, memos or publications of the trade press), multimedia files (e.g. news video clip about interviews with trading experts, described by MPEG-7 metadata) or images (e.g. sales charts or market portfolios). Semantically integrating and relating these information objects to specific reporting or plan items found in an SME's internal, structured databases is a crucial issue for creating proactive management information systems.

Many companies store and access business-relevant structured data (like sales figures, number of produced units or customer master data) in database systems or data warehouses. Such business data is an important basis for planning processes and analysis of the company's performance. Industrial surveys such as the BARC studies or the OLAP report series by Nigel Pendse provide ample evidence that reporting and planning databases nowadays usually support OLAP (Online Analytic Data Processing) with its multi-dimensional hierarchically-structured data cubes.

On the other hand, a significant amount of strategically relevant information is captured in information objects which are accessible via the Internet or Intranet or maintained by the company in text databases (e.g. content or document management systems).

For business analysis and planning, reporting tools based on OLAP technology are typically used to access the business data. Up to now, information that is provided by information objects like text or multimedia documents has to be retrieved and analyzed separately using retrieval and filtering tools.

Some systems, such as the one disclosed in "The integration of Business Intelligence and Knowledge Management", Cody et al, 2002, associate text information objects to business data records in a multidimensional database. The document describes a text analysis framework and how to integrate it into a multidimensional database by introducing a document warehouse and linking the two through shared dimensions.

The proposed technique automatically retrieves information objects that are related to a view on the business data model (e.g. OLAP report) at hand.

Performance Analysis and Planning in the Textile Sector - An Application Example

Consider a medium-sized German textile retailer, analysing the company performance by looking at the statement of earnings in his OLAP system. External online information sources (e.g. newstickers, forums and magazines) provide news in textual form. The news articles carry information about market actor performance, raw material prices, fashion trends, and so forth. These pieces of information are essential cornerstones for the evaluation of a company's own performance and thus crucial information for controlling and planning tasks.

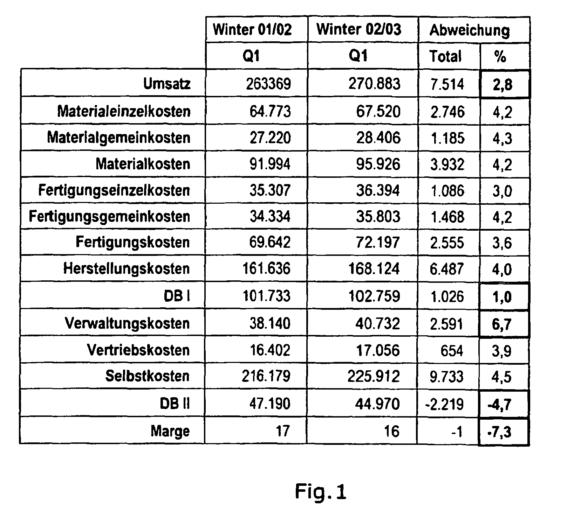

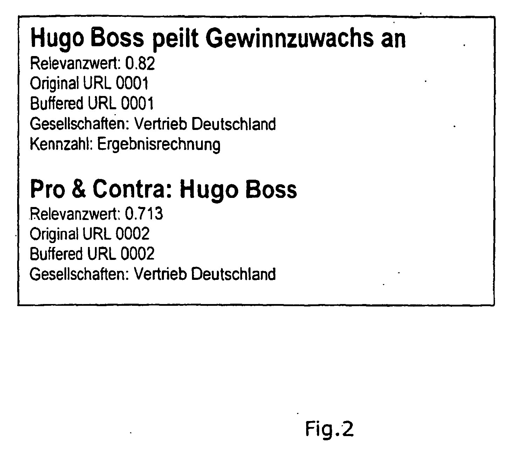

In the OLAP reporting system, so-called traffic lighting indicates a weak increase of turnover and a strong decrease of margins (marked areas in Fig. 1). This triggers the analyst to search for information on how his data relates to the market. By pressing a specific button in the tool bar of the OLAP system he thus requests to annotate his report with background information from the information sources which are externally classified by a set of categories from a given domain catalogue. Having done so, the annotation result screen pops up, showing two documents about Hugo Boss. The first text says that Boss intends to keep turnover constant while increasing profit (Fig. 2). This attracts the attention of the analyst who now decides to view some more annotated documents.

Another document says that fashion discounter Hennes & Mauritz could improve its turnover by 12% in the last quarter, mainly due to its extraordinary turnover of casual wear, especially jeans and cotton jackets in Germany. The analyst understood that competitors are successful in particular in the sector of leisure and casual wear. Furthermore he learned about trends in this area. The analyst now goes back to the OLAP reporting tool showing the company's internal business data in order to learn more about the own performance in the "casual" sector. Using the background information he can then check his options for performance improvement.

### Related Application Scenarios

The application scenario sketched above is not unique to the specific sector. Quite similar planning situations can be found in arbitrarily chosen other sectors. Just for one more example, one can consider the travel and tourism sector where information on products, destinations, carriers, booking situation and capacities is typically stored in multidimensional databases. Planning the supply for future seasons requires a detailed analysis of historic data and advanced statistical forecasts. However, a solid plan and forecast cannot be based on internal data alone. In addition, external information sources from news magazines and travel press have to be considered. Important questions to be tackled these days include: Do terror-attacks influence travel-activities and booking-behaviour of specified customer-groups? Are there sport-events (matches, championships, annual meetings) which make travelling to certain destinations more attractive? Which other current events and publications - no matter whether of political, cultural or economical nature - are relevant for forecasts and calculations?

### SUMMARY OF THE INVENTION

The present invention provides a method for the automated annotation of multi-dimensional database reports with information objects of a data repository, containing text parts, wherein the schema of the multi-dimensional database comprises a set of dimensions each including elements related by directed associations, wherein the schema of the data repository includes classes related by directed associations which the information objects are associated with, and wherein the schema of the multi-dimensional database and the schema of the data repository are connected to each other by mapping associations with each mapping association connecting an element of the schema of the multi-dimensional database with a class of the schema of the data repository, wherein the method comprises the following steps:
a) identifying elements of the schema of the multi-dimensional database that define a given multi-dimensional database report,
b) defining a graph structure between the elements of the schema of the multi-dimensional database and associated classes of the schema of the data repository by means of the mapping associations,
c) by means of a structural analysis, finding at least one path in the graph structure between a given element and classes of the schema of the data repository,
d) evaluating the relevance of a class of the schema of the data repository for the given element by determining (i) the length of a path or paths between the given element and the class or classes according to some length measure and (ii) the number of paths between the given element and its associated class or classes wherein (i) the smaller the length, the larger is the relevance and (ii) the more paths exist the larger is the relevance,
e) by means of a syntactical analysis of the text parts of the information objects, evaluating the relevance of the information objects for the class or classes,
f) cumulating and normalizing the relevance determinations according to the structural and syntactical analysis in steps d) and e),
g) outputting a list of the most relevant annotated information objects and their relevance values.

Preferably, the above-mentioned step f) is performed based on a weighted combination of the relevance values determined in steps d) and e) with the weighting factors being selectable. More preferably, the above-mentioned step b) is performed in advance to determine the graph structure and to store the predetermined graph structure. In a preferred embodiment step c) is performed in advance to find all of the existing paths between all elements and all classes, respectively, and to store these predetermined paths. According to another aspect, the above-mentioned step e) is performed in advance to evaluate the relevances of all of the information objects for all of the classes, respectively, and to store these evaluated relevances.

### Description of the Annotation Procedure

This section describes what the conditions and the ingredients of the method according to the invention are, how these are used to perform the calculation and what is returned at the end.

### General Idea and Conditions

Operational structured data is typically stored in relational or object-oriented databases. When used as a basis for analyses or decisions, this data is needed on a higher level of abstraction. Therefore, it has to be transformed, aggregated, or consolidated. The resulting data is often stored in a multidimensional database, which is organized hierarchically according to the information needs of the analyst. Similarly, text or multidimensional data is typically collected in catalogue-based information repositories. Both, multidimensional databases and information repositories have in common that there is a logical schema in hierarchical form (mono-hierarchical or poly-hierarchical) that serves as an organizing principle for the data (in the following the terms data model and data schema will be used synonymously).

Since text or multimedia data often contains background information which can help to interpret the structured data more adequately, the challenge of relating both kinds of data arises. The invention provides a method for automated linking text data with structured data.

The invented method allows for automatically analysing and relating the existing data and schemas in their unmodified form. Nevertheless, the method can be improved by additional explicit information about the relationship of the schema of the information repository and the schema of the multidimensional database: If there are predefined associations (technically spoken: mappings) between the data schemas, this information can be incorporated to perform a structural analysis. The existence of a mapping is not mandatory to make the method working but likely to improve the results. Moreover, mappings and schemas are developed at design-time and, once specified, changes are required rarely.

To summarize, the environment where the described method for linking structured data with data from an information repository can be applied should at least comprise the following aspects:
- a multidimensional database with a hierarchical (mono-hierarchical or poly-hierarchical) data schema (in the following called Business Data Model) containing structured data,
- an information repository with a hierarchical (mono-hierarchical or poly-hierarchical) data schema (in the following called Domain Catalogue) containing data,
- optionally, a mapping defining associations between the schemas.

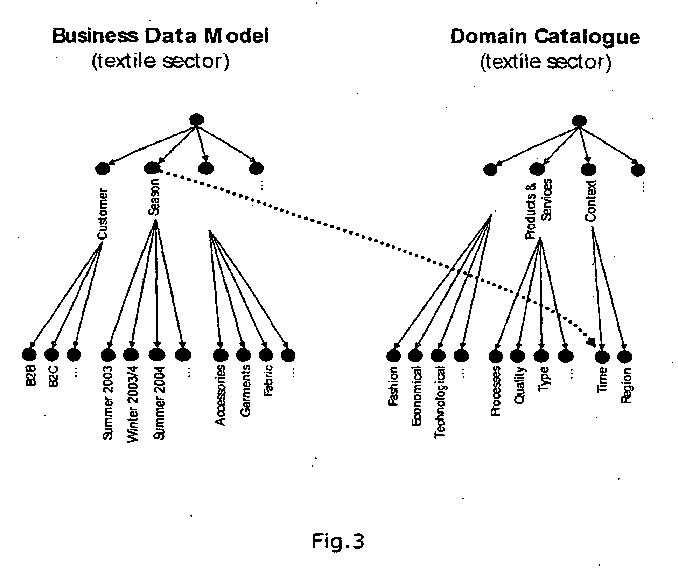

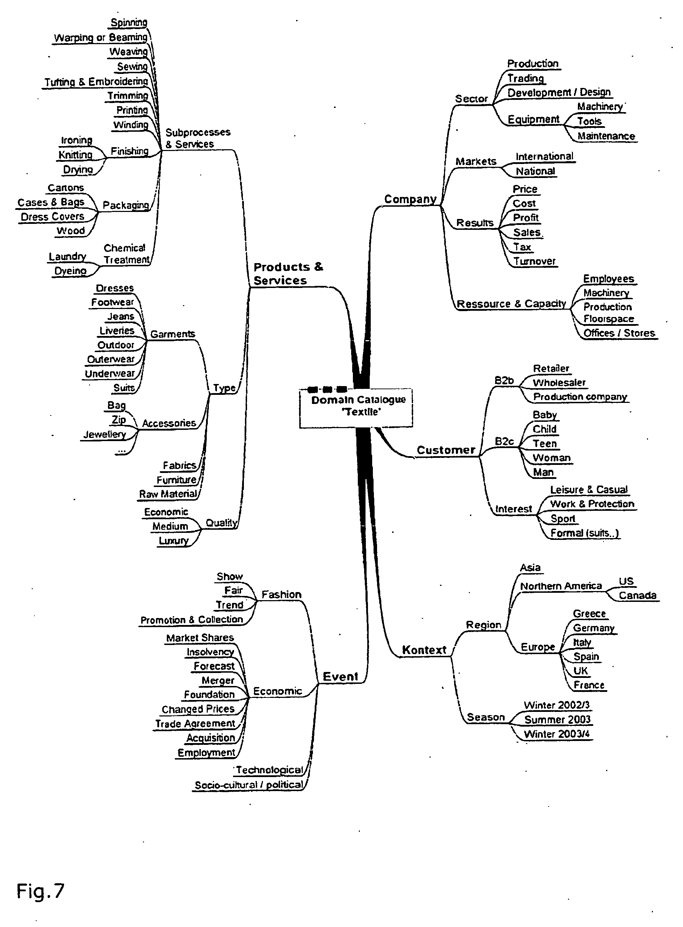

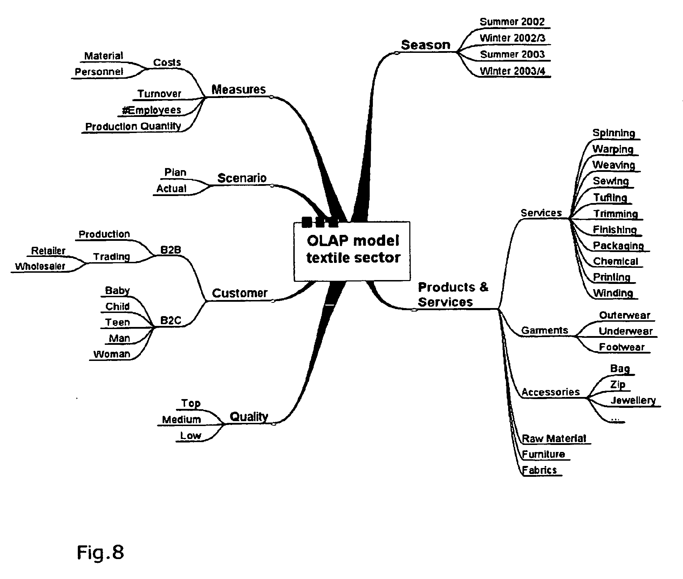

   Fig. 3 sketches the data schemas and mapping for the application example described above ("Performance Analysis and Planning in the Textile Sector"). The schemas are described in more detail later on (cf. Fig. 7 and Fig. 8).

### Ingredients, Prerequisites

The Domain Catalogue (DC)
- consists of hierarchically (mono-hierarchically or poly-hierarchically) structured classes
- is designed for classification of digital information objects (e.g. text documents)
- can be enriched syntactically by description term sets describing the classes (e.g. synonym sets or simply class name); for multilingual annotation one term set for each targeted language is required
- is typically designed and used for uniform filing and accessing repositories of information objects
- e.g. Product Catalogue, Patent Classification Scheme, File System or Topic Structure from a Content Management System.

The Business Data Model (BDM)
- consists of a set of dimensions. Each dimension consists of a set of elements that are related by directed associations in a way that all elements are connected by associations
- is typically designed and used for uniform storing and accessing structured business information to/from data bases
- one example is the multidimensional OLAP data cube model

The Mapping between the Domain Catalogue and the Business Data Model
- consists of mapping associations. Each mapping association connects a element of the Business Data Model with a (semantically related) class of the Domain Catalogue
- can be derived manually by an intellectual specification process through a domain expert or be generated automatically (e.g. by schema integration processing)

The Repository of Contextualized Digital Information Objects
- comprises object classification in terms of the Domain Catalogue (for example derived by meta tags, a classification system or the location of the text in a storage system like DMS or file system)
- comprises object content (e.g. natural language text part in the case of text documents)

The Values for the Calculation Parameters. Most important parameters are:
- depth of escalation in the hierarchical data models,
- proportion of the influence on the overall measure of (1) the structural analysis (of data models & mapping) to (2) the syntactical analysis of digital information objects. This parameter in particular allows the annotation calculation for other information objects than text documents (e.g. multimedia objects) by enabling to perform solely the structural analysis; this can be achieved by setting the impact of the syntactical analysis to zero.

The Query:
- is a set of elements of the Business Data Model
- specifies the part of the business data model that has to be annotated
- if the BDM is the OLAP Data Cube Model, the query specifies elements in every dimension by a so-called specification vector which defines an OLAP report).

If there is only a single data model which is used for the description of both, information objects and structural business data, then BDM and DC are identical. In this special case, the terms "classes" and "elements" can be regarded as synonyms in the following and the mapping between the models is simply the identity.

### Challenges

Given the data schemas (DC and BDM) and the mapping between them, the schema-based calculation of annotated documents appears obvious:
1. Take the query and calculate the set S of affected elements of the BDM.
2. Consider the mapping and look for the set C of categories out of the DC that are interlinked with S.
3. Find the set T of texts that are contextualized with categories of C.

A closer look shows that this straight-forward approach does neglect many detail problems. Some plausible statements are: A BDM element appearing many times in the query might be more important than other elements. A BDM element which itself is not directly included into the query but related to elements of the query could also be relevant. A DC class which can be reached from the elements of the query through many paths of the mapping might be more important than another class which is accessible by just one path. A DC class which is not accessible directly through the mapping might still be of a certain interest. An information object which is described by many of the categories fitting to the query might be more important than another information object whose context contains only one of the categories, etc. Finally, one has to address the question how all these cases can be operationally distinguished and combined to a meaningful normalized relevance measure.

The description of the 3-step procedure above is purely qualitative, talking about various sets. Valuation is needed to cope with the intuitive differentiation motivated above. Thus, the core challenge is to figure out how weighted (ranked) sets should be generated and annexed to each other. Other practical questions that have to be addressed are: What has to be done if there is no explicit mapping or the mapping is bad? Which role do the semantics of the data schemas play for the calculations?

In the invented method, rules are proposed (e.g. "the larger the structural distance between two schema elements are, the less related they are", "the more paths between two schema elements exist, the more related they are", etc.) that are formalised by formulae which are described in "preferred embodiment" paragraphs. The rules describe the properties of measures, rather than concrete measures themselves, to allow the flexible fine-tuning of the method for specific situations and needs. One strength of the proposed method consist in the facility to annotate existing sources of structured information from multidimensional databases with information objects from existing text or multimedia information repositories. The method describes a structural and a syntactical analysis which can be combined. Moreover it offers a structural escalation in the data schemas and many parameters to adjust the weightings.

The structural analysis can be omitted if there is no information about the mapping between the data models. The syntactical analysis can be left out in multilingual or multimedia settings, where a purely structural analysis might be reasonable due to missing or insufficient syntactical information.

### Steps

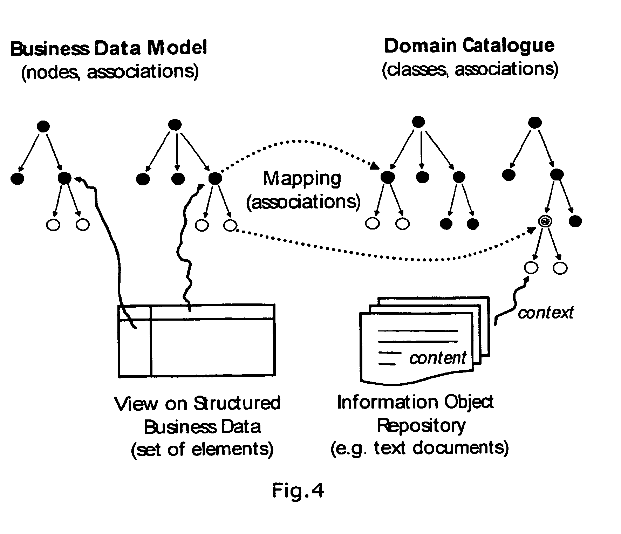

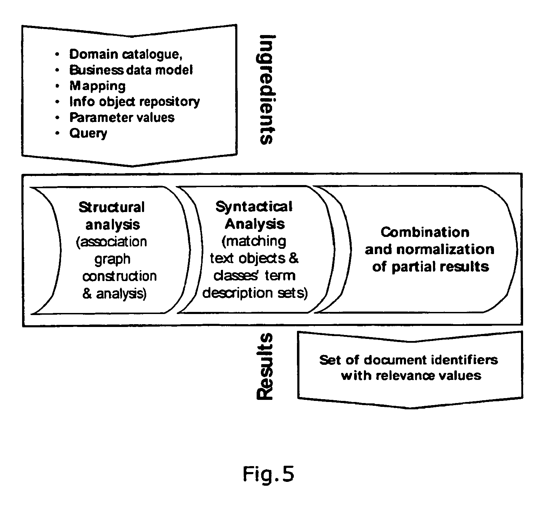

In the following the calculation steps of the annotation technique and outcomes of each step are described. The underlying principle is the following (cf. Fig. 4 and Fig. 5):

The relevance of information objects for a query is a weighted average of structural and syntactical analysis. The structural analysis exploits the predefined directed mapping between the data models, extended by the structural properties of both models, leading to the relevance of Domain Catalogue classes for elements contained in the query. The syntactical analysis estimates the relevance of the text part of information objects for the classes with which they are associated. Taken together, the measure reflects the relevance of information objects for the query, i.e. the set of elements of the business data model.

### Structural Analysis:

Association Graph Construction: In the structural analysis, the Business Data Model, the Domain Catalogue and the Mapping between them are treated from a purely structural point of view. They are transformed into a graph representation which allows for the application of standard graph algorithms, leading to a weighted directed graph. Weights might be declared to emphasize associations. If weighting of edges is not intended, all edges can be weighted equally by 1.

Result is a weighted directed acyclic graph (weighted DAG in short) consisting of nodes (class nodes and element nodes) and weighted directed edges (originating from the Business Data Model, the Domain Catalogue and the Mapping), defined as follows:
a. Associations between the nodes of the Business Data Model are directed (from a node to the sub-nodes),
b. associations between the classes of the Domain Catalogue are directed (from a class to the sub-classes),
c. associations of the mapping are directed (from the Business Data Model to the Domain Catalogue; i.e. a node can be mapped to a class).

Association Graph Analysis: To assess the relevance of each class of the Domain Catalogue for elements of the Business Data Model that are contained in a query, a relevance measure is applied that has to be defined for the application of the technique. The following rules describe the intuition, guiding such a measure for assessing the relevance of a DC class for a BDM element:
(1) The larger the distance between an element node and a class node in the graph is (in terms of the number of edges on paths between the class and the element, and in terms of their weights), the smaller is the relevance of the class for the element.
(2) The more paths between an element node and a class node in the graph exist, the larger is the relevance of the class for the element.

Preferred Embodiment: One example of a relevance measure is the inverse of the number of edges on the path of minimal length through the graph from a source element node to a target class node. To apply this measure, the shortest path between each element node and each class node has to be calculated (this calculation has to be processed only once!). Expressed in graph-theoretic termini, this is a specific 'all pairs shortest path' problem. A well-known algorithm for shortest path calculation in directed graphs is Floyd's algorithm. The shortest path approach implements principle (1). Alternatively, to implement principles (1) and (2), the length of all paths from an element node to a class node can be averaged, or flow algorithms might be employed.

Often, the data models are specialization hierarchies. Consequently, following a directed link in the graph ("downwards step") implies a switch to a more specific node. Depending on the semantics of the data schemas, it can be reasonable to relax the treatment of directed links by allowing "upwards steps", i.e. searching for nodes in the reverse direction of links (which of course implies an increase of algorithmic complexity).

Outcome: The outcome of the structural analysis are relevance values for all pairs of classes and elements (*rel_{BDM-DC}*).

### Syntactical Analysis:

Syntactical analysis can be applied if the information objects contain a text part (e.g. natural language in text documents, or text descriptors in MPEG-7 multimedia data). The syntactical analysis calculates the relevance of the text part of information objects for the classes with which the information object is classified. Therefore, the match between the text part of an information object (e.g. the content of a natural language text document or textual metadata of a multimedia object) and the description term set of a class (maybe considering the language to select the appropriate term set) is calculated. This is done by the application of information retrieval relevance measures: Among these are statistical, probabilistic or knowledge-based methods.

Preferred Embodiment: One example of a simple relevance measure is a statistical measure: Relevance of an information object for a DC class corresponds to the frequency of terms of the class's description term set in the text part of the information object. Standard language processing techniques like stemming, thesauri, and dictionaries can improve the accuracy of the measure.

Outcome: The outcome of the syntactical analysis is, for each class of the Domain Catalogue, a set of information objects associated with the class and their relevance for the class *(rel_{Dc-Doc}).*

### Combination

The Combination of partial results (*rel_{BDM-DC}, rel_{DC-DOC}*) to overall information object relevance is influenced by parameter values that are partially mentioned below. For the classes that are assessed relevant by the structural analysis, the classified (by one or more classes) information objects are rated according to the results of the syntactical analysis: The partial results are normalised and the weighted combination is calculated. Note that the combination is zero if at least one of the partial results is zero. Information objects are sorted by decreasing relevance value.

Outcome: The outcome of the combination (and thus of the whole annotation method) is
- a list of identifiers of annotated information objects (objects that are automatically assessed to be relevant for the given set of elements of the Business Data Model), sorted by the relevance value for each information object, and
- a relevance value between 0 and 1 (metric scale) for each annotated information object thus defining not only an order of the texts but also a magnitude of relevance for all annotated information objects.

### Calculation Parameters

In the following a set of calculation parameters is presented.
- The maximum level of escalation k specifies how many steps are maximally tracked within a data schema to find paths between elements and classes. Thus the maximum path length is 2k+1. If no constraint on the escalation level is intended, k can be set to the size of the largest path in a data schema.
- The influence of the structural and the syntactical analysis results (i.e. rel_{BDM-DC}, rel_{DC-DOC}) on the overall relevance, is adjusted by α and β. The parameters express the proportion α:β of the partial measures. One parameter might be set to 0 if there is no structural (respectively, syntactical) information available. Experiments show that the structural analysis is usually superior to syntactical analysis. Good results could be achieved in the order of α:β = 8:1. The optimal balance between the sub-measures clearly depends on the quality of the mapping and the syntactic properties of Domain Catalogue and Information Objects.

### Pre-Calculation :

Both, the syntactical and the structural analysis may partially be calculated in advance (pre-calculation) and stored in a database. This is possible because for partial results that only depend on the given models, mapping and repository - not on a query. Pre-calculation may optimize the time required for query processing. When the Domain Catalogue, the Mapping or the Business Data Model change, the pre-calculated graph as well as information about path lengths need to be updated, i.e. the structural analysis has to be re-performed. When the information object repository changes, the relevance of information objects for classes has to be updated.

### Generic Architecture

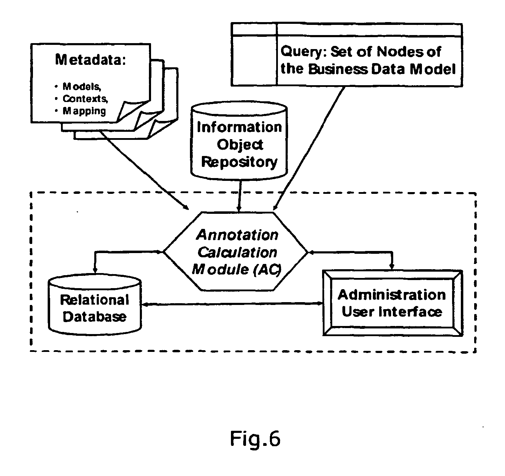

As an example a sample architecture for the realization of the annotation calculation technique is described which technique can be implemented as a distributed internet-based client-server architecture (cf. Fig. 6).

Core of the architecture is the server application (Annotation Calculation Module = AC). Metadata (Domain Catalogue, Business Data Model, Mapping) is stored in XML documents and accessible for the AC. In addition, the repository of contextualized information objects (e.g. a content management system) is accessible for the AC. The AC is connected with a relational database which can be accessed by a database manipulation and query language (e.g. SQL). The database is used for storage and retrieval of the pre-calculated intermediate results (i.e. the results of structural and syntactical analysis). The pre-calculation and parameterisation can be controlled by the Administration User Interface which can also be addressed for the maintenance of the relational database. The query is produced by an external client system (e.g. a management information system with OLAP reporting) which asks the AC for annotation of the specified elements of the Business Data Model.

### BRIEF DESCRIPTION OF THE DRAWING

The invention will be explained in more detail referring to the drawing.
- Fig. 1: shows a OLAP UI with report;
- Fig. 2: shows an annotation result list;
- Fig. 3: shows a sketch of the data schemas (data models) for the textile scenario,
- Fig. 4: shows components considered by structural and syntactical analysis,
- Fig. 5: shows prerequisites, procedure, and outcome,
- Fig. 6: shows a generic architecture,
- Fig. 7: shows a domain catalogue for the textile scenario, and
- Fig. 8: shows a business data model for the textile scenario.

### DETAILED DESCRIPTION OF PRFERRED EMBODIMENTS

### Exemplary Application of the Technique

In this chapter there is shown the application of the technique to a small scenario out of the textile industry in detail. In this example the information objects are unstructured natural language text documents and the business data model is an multidimensional OLAP data model.

### Ingredients, Prerequisites

- Catalogue of the Domain
- The Domain Catalogue has 5 main branches:
- Company
- Customer
- Event
- Context
- Products & Services

- Synonym sets:

| Domain Catalogue Class | Description Term Set |
|---|---|
| Customer / B2C / Child | Child, Teen, Teenager, Young, Youngsters |
| Products & Services / Quality / Luxury | Quality, High quality, Top quality |
| Company / Results | Business Facts, Revenue, Costs, Turnover, Spending, Asset, Profit, Tax |
| Products & Services / Degree of Finishing / End Product | End Product, Product Garments, Shoe, Shoes, Cloths, Accessories, Furniture, Fabrics, Underwear, Apparel |
| Products & Services / Degree of Finishing / End Product / Footwear | Footwear, Shoe, Shoes, Socks, Running, Formal, Work, Protection, Leather |

- Business Data Model
- The OLAP data model has 6 dimensions:
   - Season {Summer 2002, winter 02/03, ...}
   - Measures {Costs, Turnover, ...}
   - Scenario {Plan, Actual }
   - Customer {B2B, B2C}
   - Quality {Top, Medium, Low}
   - Products & Services {Garments, Accessories, ...}

- Mapping
- For the purpose of illustration a minimalist mapping is described:

| Business Data Model | Domain Catalogue |
|---|---|
| Quality / Top | Products & Services / Quality / Luxury |
| Products & Services / Type / Garments | Products & Services / Degree of Finishing / End Product |
| Measures / Revenue | Company / Results |
| Customer / B2C / Child | Customer / B2C / Child |

- Repository of Contextualized Information Objects
- Five news documents classified in terms of the Domain Catalogue:
   - Document 1 "Teen Apparel Spending":
      - Company >> Results
      - Customer >> B2C >> Child
      - Customer >> Interest >> Leisure & Casual
      - Products & Services >> Type >> Garments >> Accessories
      - Products & Services >> Type >> Garments >> Garments
   - Document 2 "H&M":
      - Company >> Results
      - Customer >> B2C >> Child; Customer >> B2C >> Man; Customer >> B2C >> Woman; Customer >> Interest >> Leisure & Casual
      - Products & Services >> Type >> Accessories; Products & Services >> Type >> Garments; Products & Services >> Quality >> Medium Low; Products & Services >> Quality >> Medium
   - Document 3 "Hugo Boss":
      - Company >> Results
      - Customer >> B2C >> Man; Customer >> B2C >> Woman; Customer >> Interest >> Leisure & Casual; Customer >> Interest >> Formal
      - Products & Services >> Type >>; Products & Services >> Type >> Garments; Products & Services >> Quality >> High
   - Document 4 "Cinderellas Shoes":
      - Customer >> B2C >> Man; Customer >> B2C >> Woman; Customer >> Interest >> Leisure & Casual; Customer >> Interest >> Formal
      - Products & Services >> Type >> Garments >> Footwear; Products & Services >> Quality >> High
   - Document 5 "Einzelhandel":
      - Company >> Results
      - Products & Services >> Type >> Accessories
      - Products & Services >> Type >> Fabrics
      - Products & Services >> Type >> Furniture

- Query
The two OLAP reports that will be annotated are defined by specification vectors:
- Query 1: Measures="Revenue", Product="GARMENT ", Quality="HIGH", Scenario="ACTUAL", Customer="ALL", Season="ALL"
- Query 2: Measures="Revenue", Product="GARMENTS"+ "Accessories"+"Furniture", Quality="ALL", Scenario="ACTUAL", Customer= "CHILD", Season="WINTER 02/03"
The first query describes a report which shows the overall revenue by end products of high quality. The second query describes a report which shows the revenue by garments sold to children during winter 2002/03.

### Steps

### Structural Analysis

Association Graph Construction and Analysis are not described here in explicitly. The annotation graph is generated by the connection of the elements of the Business Data Model and the Domain Catalogue by the mapping.

### Syntactical Analysis and Combination

The tables below depict the values for the measures rel_{BDM_DC} and rel_{DC_DOC}. For each query, three dimensions can be found in the tables (the remaining dimensions did not lead to any relevant information objects). The minimal path length within the constructed graph from the OLAP-element to a class is also shown. The term frequencies are displayed for the classes mapped to the OLAP-dimensions. rel is the combination of the two partial relevance measures. σ is the overall relevance measure (normalized combination of rel_{SDM_DC} and rel_{DC_DOC}). The information objects (here: documents) are given in the order of their relevance. Intellectual assessment turns out that for Query 1, documents 3 and 4 are relevant, whereas for Query 2, documents 1, 2 and 3 are relevant. This assessment is well reflected by the outcome of the calculations.

| Query 1 | | | | | | | | | | | | | | |
|---|---|---|---|---|---|---|---|---|---|---|---|---|---|---|
| Doc | Min. Path Length | | | rel_{BDM_DC} | | | Term Frequency | | | rel_{DC_DOC} | | | rel | a |
| | Measure | Product | Quality | Measure | Product | Quality | Measure | Product | Quality | Measure | Product | Quality | | |
| 4 (Cinderella) | 0 | 2 | 1 | 0 | 0.8 | 1 | 10 | 18 | 2 | 0.0 | 1.0 | 1 | 1.8 | .36 |
| 3 (Hugo) | 1 | 1 | 0 | 1 | 1 | 1 | 19 | 10 | 0 | 1.0 | .56 | 0 | 1.56 | .31 |
| 1 (Teen) | 1 | 1 | 0 | 1 | 1 | 0 | 10 | 9 | 0 | .53 | .50 | 0 | 1.03 | .20 |
| 2 (H&M) | 1 | 1 | 0 | 1 | 1 | 0 | 13 | 1 | 0 | .68 | .06 | 0 | .74 | .14 |
| 5 (Einzelhand.) | 1 | 1 | 0 | 1 | 1 | 0 | 8 | 2 | 0 | .42 | .11 | 0 | .53 | .10 |

| Query 2 | | | | | | | | | | | | | | |
|---|---|---|---|---|---|---|---|---|---|---|---|---|---|---|
| Doc | Min. Path Length | | | rel_{BDM_DC} | | | Term Frequency | | | rel_{DC_DOC} | | | rel | σ |
| | Measure | Customer | Product | Measure | Customer | Product | Measure | Customer | product | Measure | Customer | product | | |
| 1 (Teen) | 1 | 1 | 1 | 1 | 1 | 1 | 10 | 8 | 9 | .53 | 1 | 5 | 2.03 | .40 |
| 3 (Hugo) | 1 | 0 | 1 | 1 | 0 | 1 | 19 | 1 | 10 | 1 | .13 | .56 | 1.56 | .31 |
| 4 (Cinderella) | 0 | 0 | 2 | 0 | 0 | 0.8 | 10 | 1 | 18 | 0 | .13 | 1 | 0.8 | .16 |
| 2 (H&M) | 1 | 1 | 1 | 1 | 1 | 1 | 13 | 0 | 1 | .68 | 0 | .06 | .74 | .15 |
| 5 (Einzelhand.) | 1 | 0 | 1 | 1 | 0 | 1 | 8 | 0 | 2 | .42 | 0 | .22 | .53 | .10 |

## Claims

1. Method for the automated annotation of multi-dimensional database reports with information objects of a data repository, containing text parts, wherein the schema of the multi-dimensional database comprises a set of dimensions each including elements related by directed associations, wherein the schema of the data repository includes classes related by directed associations which the information objects are associated with, and wherein the schema of the multi-dimensional database and the schema of the data repository are connected to each other by mapping associations with each mapping association connecting an element of the schema of the multi-dimensional database with a class of the schema of the data repository,
wherein the method comprises the following steps:
a) identifying elements of the schema of the multi-dimensional database that define a given multi-dimensional database report,
b) defining a graph structure between the elements of the schema of the multi-dimensional database and associated classes of the schema of the data repository by means of the mapping associations,
c) by means of a structural analysis, finding at least one path in the graph structure between a given element and classes of the schema of the data repository,
d) evaluating the relevance of a class of the schema of the data repository for the given element by determining (i) the length of a path or paths between the given element and the class or classes according to some length measure and (ii) the number of paths between the given element and its associated class or classes wherein (i) the smaller the length, the larger is the relevance and (ii) the more paths exist the larger is the relevance,
e) by means of a syntactical analysis of the text parts of the information objects, evaluating the relevance of the information objects for the class or classes,
f) cumulating and normalizing the relevance determinations according to the structural and syntactical analysis in steps d) and e),
g) outputting a list of the most relevant annotated information objects and their relevance values.

2. Method according to claim 1, wherein step f) is performed based on a weighted combination of the relevance values determined in steps d) and e) with the weighting factors being selectable.

3. Method according to claim 1 or 2, wherein step b) is performed in advance to determine the graph structure and to store the predetermined graph structure.

4. Method according to claims 1 to 3, wherein step c) is performed in advance to find all of the existing paths between all elements and all classes, respectively, and to store these predetermined paths.

5. Method according to claims 1 to 4, wherein step e) is performed in advance to evaluate the relevances of all of the information objects for all of the classes, respectively, and to store these evaluated relevances.

## Patentansprüche

1. Verfahren zur automatischen Annotation von Mehrdimensionaldatenbank-Berichten mit Informationsgegenständen einer Datenablage, die Textteile enthalten, wobei das Schema der mehrdimensionalen Datenbank einen Satz von Dimensionen aufweist, die jeweils Elemente enthalten, welche durch zielgerichtete Assoziationen in gegenseitiger Beziehung stehen, wobei das Schema der Datenablage Klassen enthält, die durch zielgerichtete Assoziationen, mit denen die Informationsgegenstände assoziiert sind, in gegenseitiger Beziehung stehen, und wobei das Schema der mehrdimensionalen Datenbank und das Schema der Datenablage durch Mapping-Assoziationen miteinander verbunden sind, wobei jede Mapping-Assoziation ein Element des Schemas der mehrdimensionalen Datenbank mit einer Klasse des Schemas der Datenablage verbindet,
wobei das Verfahren folgende Schritte aufweist:
a) Identifizieren von Elementen des Schemas der mehrdimensionalen Datenbank, die einen gegebenen Mehrdimensionaldatenbank-Bericht definieren,
b) Definieren einer Graph-Struktur zwischen den Elementen des Schemas der mehrdimensionalen Datenbank und assoziierten Klassen des Schemas der Datenablage mittels der Mapping-Assoziationen,
c) Finden mindestens eines Pfads in der Graph-Struktur zwischen einem gegebenen Element und Klassen des Schemas der Datenablage mittels einer Strukturanalyse,
d) Evaluieren der Relevanz einer Klasse des Schemas der Datenablage für das gegebene Element durch Bestimmen (i) der Länge eines Pfads oder von Pfaden zwischen dem gegebenen Element und der Klasse oder den Klassen gemäß einer Längen-Maßgabe, und (ii) der Anzahl von Pfaden zwischen dem gegebenen Element und seiner assoziierten Klassen oder Klassen, wobei (i) je kleiner die Länge, desto größer die Relevanz ist, und (ii) je mehr Pfade existieren, desto größer die Relevanz ist,
e) Evaluieren der Relevanz der Informationsgegenstände für die Klasse oder Klassen mittels einer syntaktischen Analyse der Textteile der Informationsgegenstände,
f) Kumulieren und Normalisieren der Relevanz-Bestimmungen gemäß der strukturellen und der syntaktischen Analyse der Schritte d) und e), und
g) Ausgeben einer Liste der am meisten relevanten annotierten Informationsgegenstände und ihrer Relevanzwerte.

2. Verfahren nach Anspruch 1, bei dem der Schritt f) auf der Basis einer gewichteten Kombination der in den Schritten d) und e) bestimmten Relevanzwerte durchgeführt wird, wobei die Wichtungsfaktoren wählbar sind.

3. Verfahren nach Anspruch 1 oder 2, bei dem der Schritt b) im Voraus durchgeführt wird, um die Graph-Struktur zu bestimmen, und um die vorbestimmte Graph-Struktur zu speichern.

4. Verfahren nach einem der Ansprüche 1 bis 3, bei dem der Schritt c) im Voraus durchgeführt wird, um sämtliche existierenden Pfade zwischen sämtlichen Elementen bzw. sämtlichen Klassen zu finden, und um diese vorbestimmten Pfade zu speichern.

5. Verfahren nach einem der Ansprüche 1 bis 4, bei dem der Schritt e) im Voraus durchgeführt wird, um die Relevanz sämtlicher Informationsgegenstände für jeweils sämtliche Klassen zu evaluieren, und um diese evaluierten Relevanzen zu speichern.

## Revendications

1. Procédé pour l'annotation automatisée de rapports de base de donnée multidimensionnelle avec des objets d'informations d'un référentiel de données, contenant des parties de texte, dans lequel le schéma de la base de données multidimensionnelle comprend un ensemble de dimensions, comprenant chacune des éléments mis en relation par des associations dirigées, le schéma du référentiel de données comprenant des classes mises en relation par des associations dirigées auxquelles les objets d'informations sont associés, et le schéma de la base de données multidimensionnelle et le schéma du référentiel de données étant reliés l'un à l'autre par des associations de mappage, chaque association de mappage reliant un élément du schéma de la base de données multidimensionnelle à une classe du schéma du référentiel de données,
le procédé comprenant les étapes suivantes consistant à :
a) identifier les éléments du schéma de la base de données multidimensionnelle qui définissent un rapport de base de données multidimensionnelle donné,
b) définir une structure de graphe entre les éléments du schéma de la base de données multidimensionnelle et des classes associées du schéma du référentiel de données à l'aide des associations de mappage,
c) trouver, à l'aide d'une analyse structurelle, au moins un chemin dans la structure de graphe entre un élément donné et des classes du schéma du référentiel de données,
d) évaluer la pertinence d'une classe du schéma du référentiel de données pour l'élément donné en déterminant (i) la longueur d'un chemin ou des chemins entre l'élément donné et la classe ou les classes conformément à une certaine mesure de longueur et (ii) le nombre de chemins entre l'élément donné et sa ou ses classes associées, où (i) plus la longueur est courte, plus le degré de pertinence est élevé et (ii) plus il existe de chemins, plus le degré de pertinence est élevé,
e) évaluer, à l'aide d'une analyse syntaxique des parties de texte des objets d'informations, la pertinence des objets d'informations pour le ou les classes,
f) cumuler et normaliser les déterminations de pertinence conformément à l'analyse structurelle et syntaxique des étapes d) et e),
g) délivrer en sortie une liste des objets d'informations annotés les plus pertinents et leurs valeurs de pertinence.

2. Procédé conformément à la revendication l, dans lequel l'étape f) est exécutée sur la base d'une combinaison pondérée des valeurs de pertinence déterminées aux étapes d) et e), les facteurs de pondération pouvant être sélectionnés.

3. Procédé selon la revendication 1 ou 2, dans lequel l'étape b) est exécutée à l'avance pour déterminer la structure de graphe et pour stocker la structure de graphe prédéterminée.

4. Procédé selon les revendications 1 à 3, dans lequel l'étape c) est exécutée à l'avance pour trouver tous les chemins existants entre tous les éléments et toutes les classes, respectivement, et pour stocker ces chemins prédéterminés.

5. Procédé conformément aux revendications 1 à 4, dans lequel l'étape e) est exécutée à l'avance pour évaluer les pertinences de tous les objets d'informations pour toutes les classes, respectivement, et pour stocker ces pertinences évaluées.
